# EUROPÄISCHE PATENTANMELDUNG

(11) **EP 2 870 898 A2**
(43) Veröffentlichungstag der Anmeldung: **13.05.2015**
(21) Anmeldenummer: 14191437.4
(22) Anmeldetag: 03.11.2014
(51) Int. Cl.: A47B 91/00, F16B 12/20

(54) **Möbelelement und Möbelmontagesystem**

(30) Priorität: 03.11.2013 DE 102013018302
(71) Anmelder: ALNO Aktiengesellschaft, 88630 Pfullendorf (DE)
(72) Erfinder: Dahm-Wachsmann, Ulrich, 89075 Ulm (DE)
(74) Vertreter: Otten, Roth, Dobler & Partner

(57) **Zusammenfassung**

Die Erfindung betrifft ein Möbelelement (514), welches wenigstens ein Korpuselement (515, 516), wenigstens vier Sockelfüße (507 - 512) und wenigstens drei Verbindungselemente (532 -535) umfasst. Hierbei umfasst das Möbelelement (514) weiterhin wenigstens einen Tragrahmen (517), wobei der Tragrahmen (517) zwischen dem Korpuselement (515, 516) und den Sockelfüßen (507 - 512) angeordnet ist und wobei der Tragrahmen (517) wenigstens drei Profilschienen (501 - 506) umfasst, wobei die Profilschienen (501 - 506) derart miteinander verbunden sind, dass der Tragrahmen (517) als Leiterrahmen (522) ausgebildet bildet ist, wobei das Korpuselement (515, 516) einen Korpusboden (515a, 516a) umfasst und wobei die Verbindungselemente (532 -535) zur Verbindung des Korpuselements (515, 516) und des Tragrahmens (517) sowohl in dem Korpusboden (515a, 516a) derart formschlüssig und/oder kraftschlüssig als auch in dem Tragrahmen (517) derart formschlüssig und/oder kraftschlüssig aufgenommen sind, dass seitlich auf das Korpuselement (515, 516) einwirkende Kräfte auf den Tragrahmen (517) übertragen werden.

## Beschreibung

Die Erfindung betrifft ein Möbelelement gemäß dem Oberbegriff des Anspruchs 1 und ein Möbelmontagesystem zur werkzeugfreien Montage von Möbelelementen, insbesondere Küchenmöbelelementen gemäß dem Oberbegriff des Anspruchs 13.

Aus der DE 197 03 761 A1 ist ein Möbelelement bekannt, welches wenigstens ein Korpuselement, wenigstens vier Sockelfüße und wenigstens drei Verbindungselemente umfasst.

Der Erfindung liegt die Aufgabe zugrunde, ein Möbelelement vorzuschlagen, bei welchem eine Montage der Sockelfüße vereinfacht ist und bei welchem auch die Gefahr einer Beschädigung der Sockelfüße nach der Montage vermieden ist. Weiterhin ist es Aufgabe der Erfindung ein Möbelmontagesystem vorzuschlagen, welches den Aufbau von Möbelelementen vereinfacht.

Diese Aufgabe wird ausgehend von den Merkmalen des Oberbegriffs des Anspruchs 1 bzw. 13 durch die kennzeichnenden Merkmale des Anspruchs 1 bzw. 13 gelöst. In den Unteransprüchen sind vorteilhafte und zweckmäßige Weiterbildungen angegeben.

Das erfindungsgemäße Möbelelement, welches insbesondere als Küchenmöbelelement ausgebildet ist, umfasst neben wenigstens einem Korpuselement, wenigstens drei Sockelfüße und wenigstens drei Verbindungselemente und einen Tragrahmen. Hierbei ist bei dem Möbelelement der Tragrahmen zwischen dem Korpuselement und den Sockelfüßen angeordnet und umfasst wenigstens drei Profilschienen, wobei die Profilschienen derart miteinander verbunden sind, dass der Tragrahmen einen Leiterrahmen bildet, welche wenigstens zwei seitliche Holme und eine Sprosse umfasst, wobei das Korpuselement einen Korpusboden umfasst und wobei die Verbindungselemente in dem Korpusboden derart formschlüssig und/oder kraftschlüssig aufgenommen sind und wobei die Verbindungselemente in dem Tragrahmen derart formschlüssig und/oder kraftschlüssig aufgenommen sind, dass seitlich auf das Korpuselement einwirkende Kräfte auf den Tragrahmen übertragen werden. Hierdurch muss keine direkte Verbindung zwischen dem Korpuselement und den Sockelfüßen hergestellt werden, sondern es ist nur erforderlich, das Korpuselement mit dem Tragrahmen zu verbinden, da der Rahmen zwischen dem Korpuselement und den Sockelfüßen angeordnet ist. Dies bedeutet, dass das Möbelelement derart aufgebaut werden kann, dass das Korpuselement auf den bereits mit den Sockelfüßen verbundenen Tragrahmen aufgesetzt wird. Hierdurch wird die Gefahr vermieden, dass das Möbelelement zunächst seitlich auf dem Korpuselement liegend vollständig montiert wird und dann über die Sockelfüße - unter hoher seitlicher Belastung zweier Sockelfüße - in die Vertikale gekippt wird.

Weiterhin ist es vorgesehen, die Profilschiene als Hohlprofilschiene auszubilden, wobei die Hohlprofilschiene einen im Wesentlichen rechteckigen Innenquerschnitt aufweist, wobei die Hohlprofilschiene an wenigstens einer Seitenfläche und insbesondere an zwei oder drei benachbarten Seitenflächen eine hinterschnittene Nut aufweist. Aus derartig ausgebildeten Hohlprofilschienen lassen sich leichte, tragfähige und vielseitig nutzbare Tragrahmen aufbauen.

Es ist auch vorgesehen, die hinterschnittene Nut bzw. die hinterschnittenen Nuten der Hohlprofilschiene als im Querschnitt schwalbenschwanzförmige Nut bzw. Nuten auszubilden. Derartige Nuten sind durch ihre Formgebung besonders gut geeignet, Anbauteile verdrehfest und mit geringem Spiel formschlüssig aufzunehmen.

Zur Ausbildung des Tragrahmens ist es auch vorgesehen, das Möbelelement mit wenigstens zwei Verbindungsmitteln auszustatten, wobei jedes Verbindungsmittel an wenigstens einer Seitenfläche einen auf den Querschnitt der Nut angepassten Steg aufweist, welcher derart ausgebildet ist, dass das Verbindungsmittel mit dem Steg weitgehend spielfrei in die Nut einer der Hohlprofilschienen einschiebbar ist. Derartige Verbindungsmittel bilden Kupplungselemente, welche einfach und schnell den Aufbau des Tragrahmens als Rahmen mit Leiterstruktur ermöglichen. Hierzu werden die Verbindungsmittel mit ihren Stegen in den Nuten von Holme bildenden Hohlprofilschienen eingeschoben und von den freien Enden einer eine Sprosse bildenden Hohlprofilschiene aufgenommen.

Weiterhin ist es vorgesehen, dass wenigstens ein Steg jedes Verbindungsmittels eine diesen Steg durchlaufende Gewindebohrung und eine passende Schraube umfasst. Dies ermöglicht es, das Verbindungsmittel kraftschlüssig an einer Hohlprofilschiene zu fixieren, in deren Nut das Verbindungsmittel mit seinem Steg eingeschoben ist.

Es ist ergänzend vorgesehen, das Verbindungsmittel derart auf einen Innenquerschnitt der Hohlprofilschiene anzupassen, dass das Verbindungsmittel zur Verbindung zweier Hohlprofilschienen weitgehend spielfrei in eine der Hohlprofilschienen einsteckbar ist und dass die das Verbindungsmittel aufnehmende Hohlprofilschiene eine Bohrung aufweist, welche bei eingestecktem Verbindungsmittel auf eine weitere in dem Verbindungsmittel ausgeführte Gewindebohrung ausgerichtet ist, sofern das Verbindungsmittel mit seinem Steg in der anderen Hohlprofilschiene geführt ist und die beiden Hohlprofilschienen auf Stoß aneinander anliegen. Hierdurch ist es möglich, mit Hilfe einer passenden Schraube das Verbindungsmittel auch an einer eine Sprosse bildenden Hohlprofilschiene zu fixieren, so dass insgesamt aus den Hohlprofilschienen, den Verbindungsmitteln und den zugehörigen Schrauben ein starrer Tragrahmen in Form eines Leiterrahmens herstellbar ist.

Hinsichtlich der Sockelfüße ist es vorgesehen, dass jeder Sockelfuß wenigstens ein Eckelement, ein Tragrohr und ein Justiermittel umfasst, wobei das Eckelement einen ersten Hals und einen rechtwinklig dazu angeordneten zweiten Hals umfasst, wobei das Eckelement mit seinem ersten, waagrecht im Raum ausgerichteten Hals auf einen Innenquerschnitt der Hohlprofilschiene angepasst ist und wobei das Eckelement mit seinem im Raum senkrecht nach unten ausgerichteten zweiten Hals auf einen Innenquerschnitt des Tragrohrs angepasst ist, so dass das Eckelement klemmend in der Hohlprofilschiene und in dem Tragrohr gehalten ist. Hierdurch wird eine Verbindung zwischen dem Tragrahmen und den Sockelfüßen durch einfache Steckvorgänge hergestellt und eine aufwändige direkte Befestigung der Sockelfüße an dem Korpus, welche z.B. ein Einschrauben erfordert, vermieden.

Es ist auch vorgesehen, den Korpusboden des Korpuselements mit Aufnahmen für die Verbindungselemente auszustatten, wobei das Verbindungselement einen Kopfkörper und einen Fußkörper umfasst und wobei der Kopfkörper in der Aufnahme des Korpusboden formschlüssig und insbesondere drehbar um eine senkrecht auf dem Korpusboden stehende Drehachse aufgenommen ist und wobei der Fußkörper entweder an einer Seitenfläche einer der Hohlprofilsschienen des Tragrahmens anliegt oder in einer der Nuten einer der Hohlprofilschienen des Tragrahmens aufgenommen ist. Durch die Verbindungselemente lässt sich mit minimalen Aufwand eine Verbindung zwischen dem Korpus und einem aus dem Tragrahmen und den Sockelfüßen gebildeten Unterbau herstellen, welche den an ein Möbelelement bzw. Küchenmöbelelement gestellten Anforderungen gerecht wird.

Es ist vorgesehen, den Fußkörper des Verbindungselements derart auf eine hinterschnittene Nut der Hohlprofilschiene des Tragrahmens anzupassen, dass dieser senkrecht von oben in die Nut einsteckbar ist und dass dieser beim Einstecken mit gegenüberliegenden Rastkörpern in die Nut einrastet oder dass dieser mit gegenüber liegenden Flügeln nach dem Eintritt in die Nut und einer Verdrehung um eine senkrechte Drehachse gegenüberliegende Hinterschnitte der Nut hintergreift. Hierdurch wird zwischen dem Korpus und einem aus dem Tragrahmen und den Sockelfüßen hergestellten Unterbau eine Verbindung geschaffen, welche sicher stellt, dass der Unterbau beim Anheben des Möbelelements am Korpus ebenfalls angehoben wird und das Möbelelement - unabhängig davon wo es gegriffen wird - sicher transportiert werden kann.

Insbesondere um das Verbindungselement gegenüber dem Tragrahmen bzw. einer Hohlprofilschiene des Tragrahmens Verdrehen zu können, ist es vorgesehen, den Kopfkörper mit einer Anpassung auf ein Handwerkzeug auszustatten, wobei diese Anpassung insbesondere durch eine in dem Korpusboden des Korpuselements ausgeführte Bohrung zugänglich ist. Hierdurch lässt sich eine Verbindung zwischen dem Korpus und dem Tragrahmen auf einfache Weise von einem Innenraum des Korpus aus durch eine Drehbewegung herstellen. Auch eine Demontage ist durch ein Zurückdrehen des Verbindungselements hierdurch einfach möglich.

Alternativ ist es auch vorgesehen, den Fußkörper des Verbindungselements derart auf eine hinterschnittene Nut der Hohlprofilschiene des Tragrahmens anzupassen, dass dieser zur Montage des Korpuselements seitliche in die Nut eingeschoben ist. In einem solchen Fall wird die erforderliche Zahl an Verbindungselementen in den Tragrahmen eingeschoben und positioniert und dann das Korpuselement aufgesetzt, so dass dieses die Kopfkörper der Verbindungselemente mit seinen Aufnahmen vorzugsweise rastend aufnimmt.

Schließlich ist es auch vorgesehen, das Tragrohr und das Eckelement derart zu dimensionieren, dass das Tragrohr zwei aufeinander ausgerichtete Eckelemente aufnimmt. Hierdurch lassen sich auf einfache Weise lange Tragrahmen bilden, auf welche mehrere Korpuselemente zur Bildung eines großen Möbelelements in Form einer zusammenhängenden Möbel- oder Küchenzeile aufgesetzt werden können.

Bei dem Möbelmontagesystem zur werkzeugfreien Montage von Möbelelementen, insbesondere von Küchenmöbelelementen, welches mindestens ein Verbindungselement und mindestens eine Aufnahme umfasst, wird das Verbindungselement erfindungsgemäß formschlüssig in die Aufnahme eingeklickt und verfügt erfindungsgemäß über Mittel zur Befestigung in einer Profilschiene.

Unter einer werkzeugfreien Montage ist eine Montage zu verstehen, welche weder den Einsatz von Spezialwerkzeugen wie beispielsweise Sägen, Bohrern, Fräsern oder Akkuschraubern oder dergleichen noch den Einsatz von Kleb- und Dichtungsstoffen wie Silikon oder ähnlichem vorsieht. Die Verwendung eines Handschraubendrehers oder eines 6-Kant-Drehwerkzeugs oder dergleichen ist denkbar. Werkzeugfrei bedeutet insbesondere, dass eine Montage durch den Endbenutzer ohne besondere Kenntnisse ermöglicht wird.

Das erfindungsgemäße System ist in den folgenden Ausführungsbeispielen schematisch dargestellt. Merkmale der Ansprüche und/oder der technischen Beschreibung sind dem Ausführungsbeispiel in prinzipieller Weise zu entnehmen.

Es zeigen:
- Fig. 1: Eine Darstellung eines Möbelelements mit drei Korpusteilen;
- Fig. 2: einen Schnitt durch den Übergangsbereich zwischen Arbeitsfläche und Hochschrank;
- Fig. 3: eine Darstellung der Verbindung der Fußelemente;
- Fig. 4: eine prinzipielle Darstellung eines Verbindungselements;
- Fig. 5: eine prinzipielle Darstellung eines Systems aus Möbelfuß, Trägerschiene, Korpusboden;
- Fig. 6: eine schematische Montageablaufdarstellung;
- Fig. 7: eine Detailansicht eines selbstsichernden Verbindungselements;
- Fig. 8: eine schematische Darstellungen von Seitenverbindern und Türbeschlägen;
- Fig. 9: ein alternatives Verbindungselement mit Konterplatte;
- Fig. 10: eine Schnittdarstellung des alternativen Verbindungselements;
- Fig. 11: eine Anordnung der Verbindungselemente im Rastersystem;
- Fig. 12: eine Darstellung einer Querverbindung mit Steckelement und Wandabschluss;
- Fig. 13: eine Schnittdarstellung der Abschlussleisten;
- Fig. 14: eine schematische Darstellung der Montage der Wandabschlussleiste;
- Fig. 15: ein Korpusverbinder;
- Fig. 16: Darstellungen von aufsteckbaren Zubehörhaltern;
- Fig. 17: eine perspektivische Ansicht eines aus Profilschienen und Sockelfüßen gebildeten Unterbaus, welcher unvollständig zusammengebaut ist;
- Fig. 18: eine weitere perspektivische Darstellung des in der Figur 17 gezeigten Unterbaus in vergrößerter und vollständig zusammengebauter Ansicht;
- Fig. 19: eine Explosionsansicht eines Tragrohrs und eines Justiermittels der in den Figuren 17 und 18 gezeigten Sockelfüße;
- Fig. 20: eine perspektivische Ansicht eines ersten Eckelements eines der in den Figuren 17 und 18 gezeigten Sockelfüße;
- Fig. 21: eine perspektivische Ansicht eines zweiten Eckelements eines der in den Figuren 17 und 18 gezeigten Sockelfüße;
- Fig. 22: eine perspektivische Ansicht einer Blendkappe eines der in den Figuren 17 und 18 gezeigten Sockelfüße;
- Fig. 23: einen Querschnitt durch eine der in den Figuren 17 und 18 gezeigte Profilschiene;
- Fig. 24: eine perspektivische Ansicht der in der Figur 23 gezeigten Profilschiene;
- Fig. 25: eine perspektivische Ansicht eines Verbindungsmittels, welches in dem in den Figuren 17 und 18 gezeigten Tragrahmen verbaut ist und
- Fig. 26: einen Schnitt entsprechend einer Schnittebne XXV-XXV durch das in der Figur 25 gezeigte Verbindungsmittel.

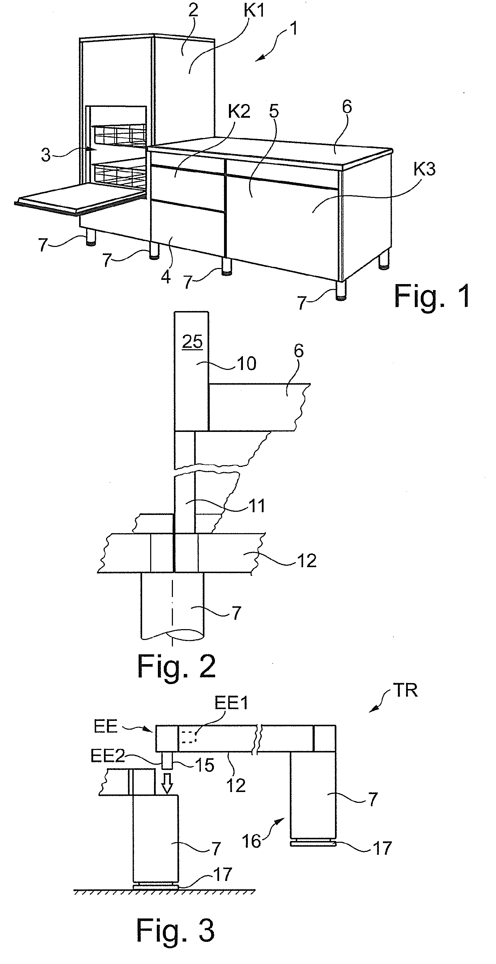

Im Einzelnen zeigt Fig.1 eine Darstellung eines Möbelelements 1 mit drei Korpusteilen K1, K2 und K3. Die Korpusteile K1 bis K3 umfassen einen Hochschrank 2 mit Spülmaschine 3 sowie einen 60er Unterschrank 4 und einen 90er Unterschrank 5. Die Korpusteile 4 und 5 sind mit einer Arbeitsplatte 6 abgedeckt. Alle Korpusteile 2, 4, 5 sind auf Sockelfüßen 7 aufgestellt.

Erfindungsgemäß ist vorgesehen, dass ein derartiges Möbelelement 1 werkzeugfrei, also höchstens unter Einsatz eines Schraubendrehers oder eines 6-Kant-Schlüssels oder dergleichen vollständig montierbar ist.

Fig. 2 zeigt einen Schnitt durch den Übergangsbereich zwischen Arbeitsfläche 6 und Hochschrank 2. Die Arbeitsfläche 6 grenzt an eine Wange 10 des Hochschranks 2 an. Unterhalb der Wange 10 ist in vertikaler Fortsetzung eine Unterschrankwange 11 angeordnet, welche auf ein Trägerprofil 12 bzw. eine Profilschiene bzw. eine Hohlprofilschiene an ihrer Unterseite aufsetzt. Das Trägerprofil 12 wird von den Sockelfüßen 7 getragen. Die Ausführung ist vorliegend unterbrochen dargestellt, um die Details sichtbar zu machen.

Fig. 3 zeigt eine Darstellung der Verbindung der Fußelemente 7 mit den Trägerprofilen 12. Die Trägerprofile 12 weisen Zapfen 15 auf, welche in entsprechende Ausnehmungen (nicht dargestellt) in den Sockelfüßen 7 eingreifen. Die Zapfen 15 können dabei lose eingreifen oder über Rastelemente verfügen, so dass sie nach einem Einrasten derart fest verbunden sind, dass der Sockelfuß 7 am Trägerprofil 12 angehoben werden kann(siehe Situation 16). Die Sockelfüße 7 umfassen an ihrer Unterseite Justiermittel 17, beispielsweise eine Schraubplatte, um das Möbelelement auszurichten. Mehrere über die Sockelfüße 7 miteinander verbundene Trägerprofile 12 bilden einen Tragrahmen TR. Die Zapfen 7 der Trägerprofile 12 sind gemäß einer Ausführungsvariante durch Eckelemente EE gebildet, wobei die Eckelemente EE jeweils einen ersten, waagrecht ausgerichteten Hals EE1 umfassen, welcher endseitig in eines der Trägerprofile 12 einsteckbar ist, und wobei die Eckelemente EE jeweils einen zweiten, nach unten gerichteten Hals EE2 umfassen, welcher als Zapfen 15 ausgebildet ist und in einen der Sockelfüße 7 einsteckbar ist.

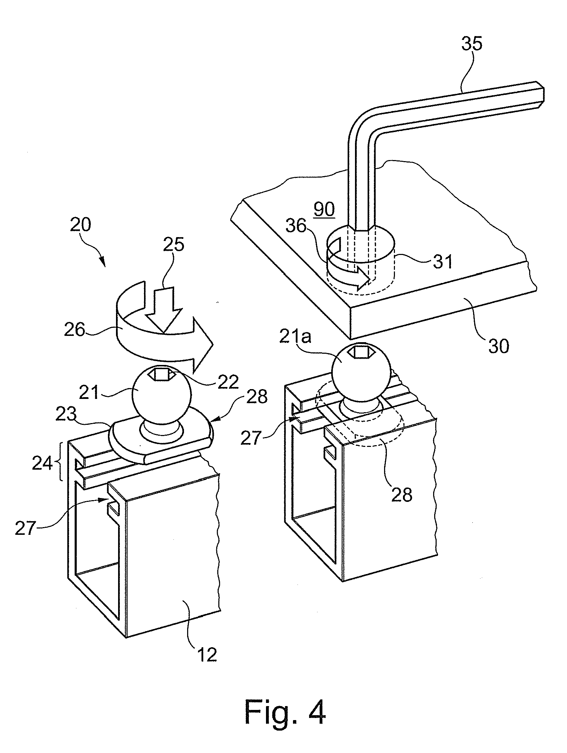

Fig. 4 zeigt eine prinzipielle Darstellung eines erfindungsgemäßen Verbindungselements 20. Das Verbindungselement 20 umfasst einen Kopf 21, welcher eine Aufnahme 22 für einen Schraubendreher oder einen 6-Kant-Dreher aufweist. Unterhalb des Kopfes 21 ist eine Platte 23 drehfest mit dem Kopf 21 verbunden angeordnet. In eine besonderen Ausführung ist der Kopf 21 und die Platte 23 einstückig ausgebildet. Die Platte ist dabei länglich, insbesondere als zweiseitig geschnittene Scheibe ausgebildet.

Das Verbindungselement 20 wird in einen oberen Bereich 24 des Trägerprofils 12 in vertikaler Richtung 25 eingesetzt und zur Verriegelung um ca. 90° mittels der Aufnahme 22 und einem Drehhilfsmittel in eine Drehrichtung 26 gedreht. Der obere Bereich 24 umfasst eine Nut 27, in welche der längliche Teil 28 der Platte 23 nach Drehung eingreift. Hierdurch wird das Verbindungselement 20 verriegelt.

Ein Korpusboden 30 umfasst eine Aufnahme 31 zur formschlüssigen Aufnahme des Kopfes 21 des Verbindungselements 20, wobei durch die kugelähnliche Kopfform 21a des Kopfes 21 ein Überwinden eines Rastwiderstandes bein Einklicken des Kopfes 21 in die Aufnahme 31 vorzugsweise vorgesehen ist. Nach erfolgreichem Einklicken des Kugelkopfes 21 in die Aufnahme 31 wird das Verbindungselement 20 mittels eines Dreh-Hilfsmittels 35 bzw. Handwerkzeugs in Drehrichtung 36 verriegelt. Der Korpusboden 30 ist damit sicher mit dem Trägerprofil 12 verbunden.

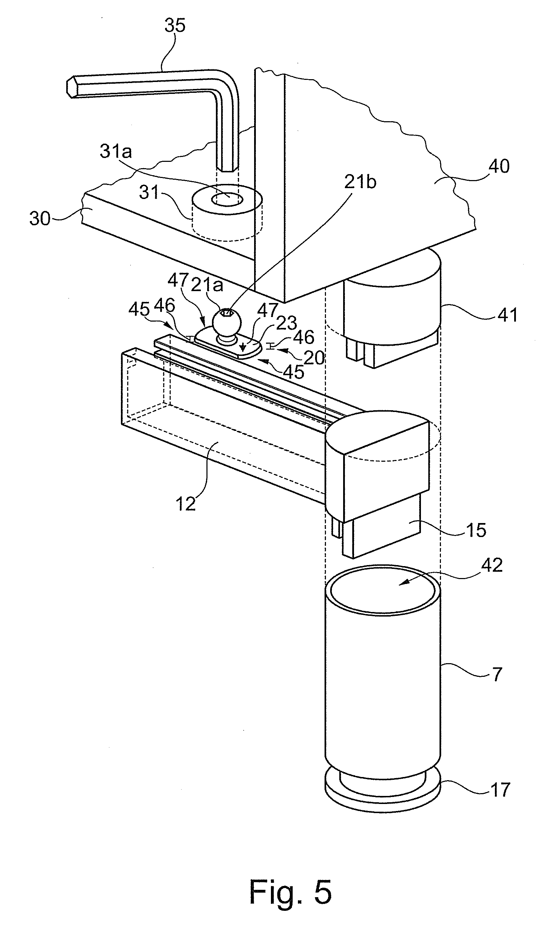

Fig. 5 beschreibt eine prinzipielle Darstellung eines Systems aus Sockelfuß 7 bzw. Möbelfuß, Trägerschiene 12, Korpusboden 30. Am Korpusboden 30 ist eine Seitenwange 40 vorgesehen. Die Seitenwange 40 umfasst anteilig oder als separates Bauteil eine Blendkappe 41 für den Sockelfuß 7, welche bei einem kreisrunden Sockelfuß 7 und eingerasteter Trägerschiene 12 mit Zapfen 15 den verbleibenden offenen Bereich 42 abdeckt.

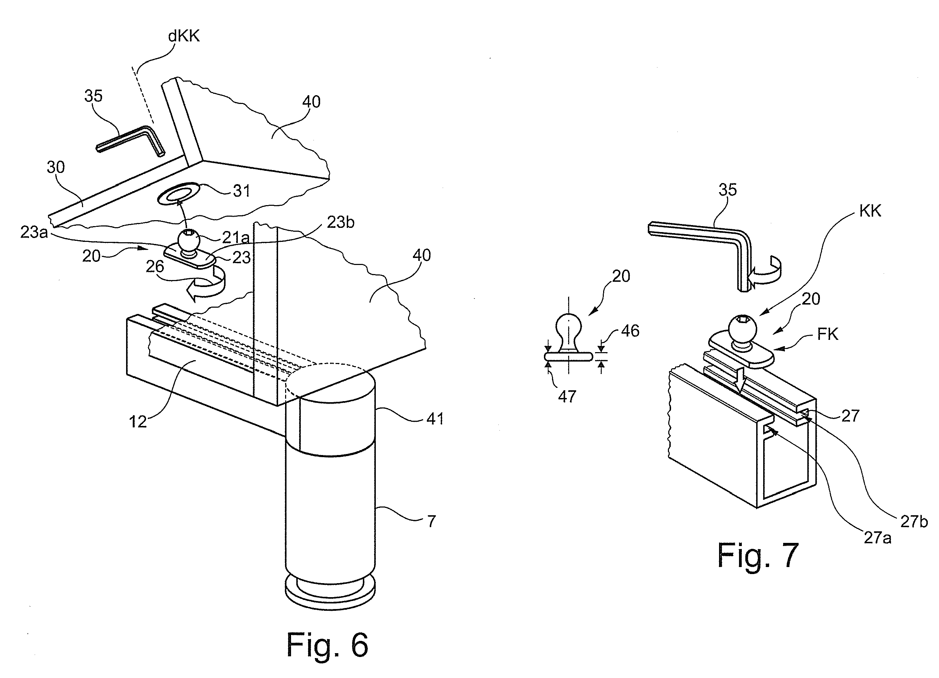

Am Verbindungselement 20 kann vorteilhafterweise vorgesehen sein, dass ein einer Schmalseite 45 der Platte 23 unterhalb des Kopfes 21 eine Keilform vorgesehen ist. Dabei ist eine erste Materialstärke 46 der Platte 23 an einer Kante der Schmalseite größer als eine zweite Materialstärke 47 an der gegenüberliegenden Kante dieser Schmalseite ausgebildet. In der länglichen Form der Platte 23 sind die gegenüberliegenden Schmalseiten bzw. Flügel 23a, 23b punktsymmetrisch zum Kopf 21 hinsichtlich ihrer Keilform ausgebildet. Auf diese Weise verspannt sich die Keilform der Platte 23 in der Nut 27 des Profils 12. Diese Montageweise wird in Fig. 6 und Fig. 7 weiter verdeutlicht. Hierbei wird ein Kopfkörper KK des Verbindungselements 20 von der in dem Korpusboden 30 ausgeführten Aufnahme 31 aufgenommen und hierbei wird ein Fußkörper FK des Verbindungselements 20 in der Nut 27 aufgenommen und ist nach einem Verdrehen um eine Drehachse dKK in der Nut 27 verriegelt. Zum Verdrehen wird das Dreh-Hilfsmittel 35 durch eine Bohrung 31a in die Aufnahme 31 gesteckt und greift dort in eine auf das Dreh-Hilfsmittel 35 angepasst Ausnehmung 21b in dem Kopf 21 des Verbindungselements 20.

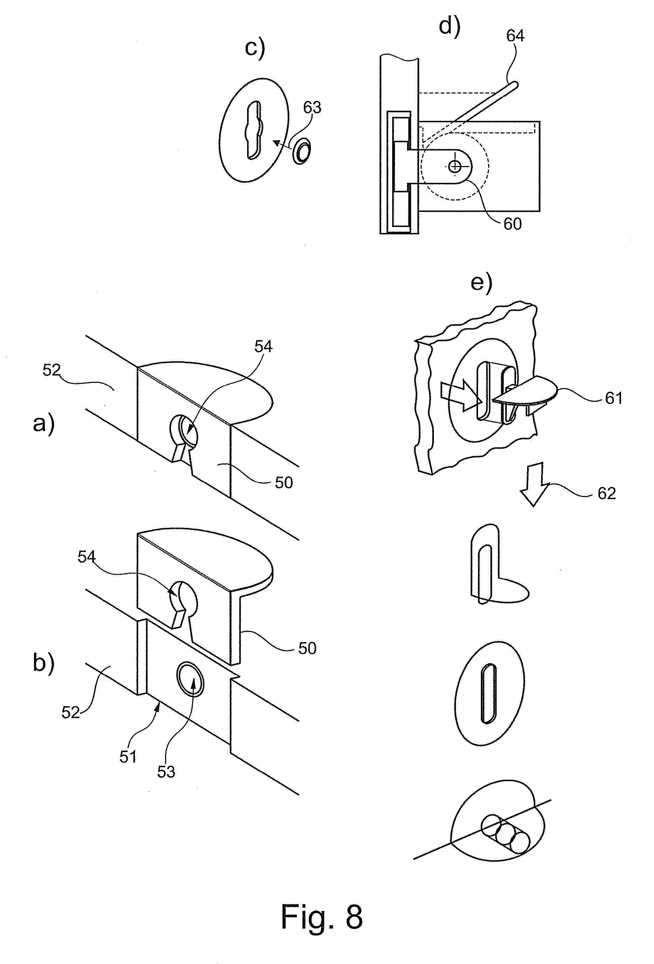

Fig. 8a zeigt eine schematische Darstellungen von Seitenverbindern 50 und Türbeschlägen. Fig. 8b zeigt, dass die Seitenverbinder 50 in Fräsungen 51 in Möbelplatten 52 eingesetzt werden, wobei die Fräsung 51 vorzugsweise eine Schwalbenschwanzform zur formschlüssigen Aufnahme des Seitenverbinders 50 aufweist.

Die Fräsung 51 umfasst ein Loch 53 zur Aufnahme des kugelförmigen Kopfes 21 oder eines ähnlichen Elements. Der Seitenverbinder 50 wiederum bietet mit einer Ausnehmung 54 einen dem Loch 53 entsprechenden Bereich und damit das notwendige Rastmoment, welches ein Einklicken des Kopfes 21 des Verbindungselements 20 erlaubt. Auf diese Weise ist eine sichere Verbindung von Bauteilen möglich.

Fig. 8c, Fig. 8d und Fig. 8e zeigen weitere Verbindungselemente und dazugehörige Aufnahmen in Möbelkorpusplatten, welche beispielsweise für die Aufnahme eines Türbeschlags 60 (Fig. 8d) oder einer Fachbodenauflage 61 ausgebildet sind. Auch bei der Anwendung dieser Verbindungselemente sind Verrastungen durch Verschieben 62, Einklicken 63 oder bajonettartige Verriegelungen mittels eines Hilfsmittels 64 denkbar.

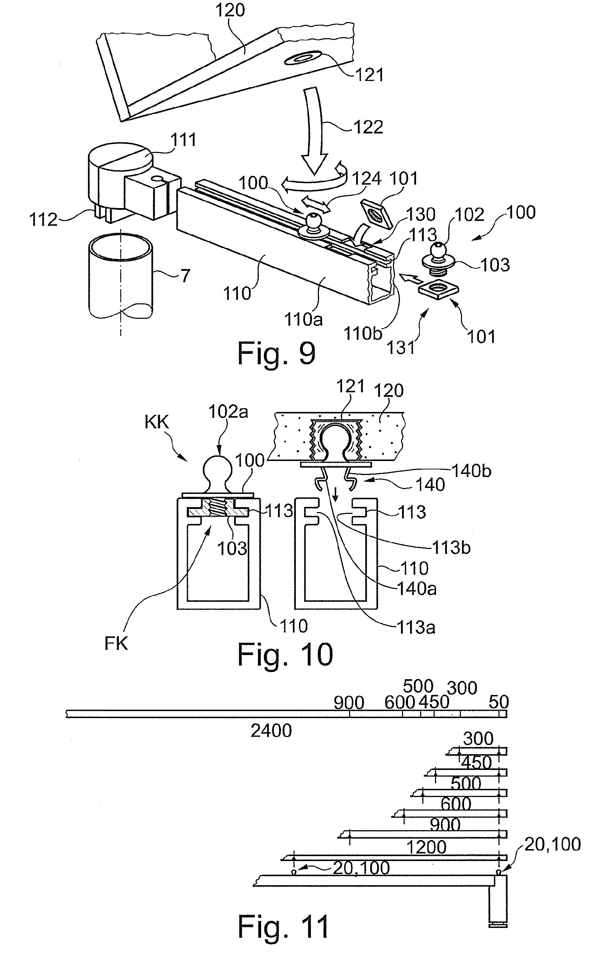

Fig. 9 zeigt ein alternatives Verbindungselement 100 mit Konterplatte 101. Das Verbindungselement 100 umfasst ebenfalls einen Kopf 102 und eine Platte 103, welche einen Kopfkörper KK bilden, wobei der Kopf 102 insbesondere als Kugelkopf 102a für die bezeichnete Rasttechnik ausgeformt ist.

Das Verbindungselement 100 wird entsprechend den vorherigen Ausführungsbeispielen in ein Profil 110 bzw. eine Profilschiene bzw. eine Hohlprofilschiene eingesetzt und mittels einer Drehung gegen die Konterplatte 101 verspannt. Hierbei umfasst ein Fußkörper FK einen Gewindestift und die Konterplatte 101. Das Profil 110 ist auf ein Eckelement 111 aufgesteckt, welches Zapfen 112 aufweist, welche in die Füße 7 eingreifen. Das Profil 110 umfasst ebenfalls eine Nut 113 zur Aufnahme der Konterplatte 101. Ein Korpusboden 120 mit entsprechend angeordneter Aufnahme 121 wird von oben her in Pfeilrichtung 122 auf das Verbindungselement 100 aufgeklickt, nachdem das Verbindungselement 100 in Längsrichtung 124 positioniert wurde.

Zur Montage kann das Profil 110 eine Einführungsöffnung 130 für die Konterplatte 101 aufweisen. Alternativ oder ergänzend kann das System aus Verbindungselement 100 und Konterplatte 101 auch seitliche eingeschoben werden (siehe Zeichnungsbereich 131).

Fig. 10 zeigt eine Schnittdarstellung des alternativen Verbindungselements 100 mit Konterplatte 101. Zusätzlich wäre es auch denkbar, das Verbindungselement mit Rastklinken 140 auszustatten, welche zwei Rastkörper 140a, 140b umfasst, um auf die Konterplatte 101 zu verzichten. Dies Rastkörper 140a, 140b greifen ebenso wie die Konterplatte 101 oder die in der Figur 5 gezeigte Plate 23 in Hinterschnitte 113a, 113b der Nut 113 bzw. 27a, 27b der Nut 27 (siehe Figur 7) ein.

Die Anordnung eines Verbindungselementes in einer Profilschiene erlaubt die Anwendung von einer Vielzahl von Rastergrößen eines Korpusbestandteils, da die Position im Profil verschoben werden kann. Exemplarisch sind einige Positionen in Fig. 11 dargestellt.

Gemäß einer nicht dargestellten Ausführungsvariante ist es auch vorgesehen, das Korpuselement bzw. Korpusteil mit den von diesem aufgenommen Verbindungselementen derart in Anlage an Seitenflächen 110a, 110b der Profilschienen 110, welche den Leiterrahmen bilden, zu bringen, dass das Korpuselement und der Leiterrahmen durch seitlich angreifenden Kräfte nicht gegeneinander verschiebbar sind.

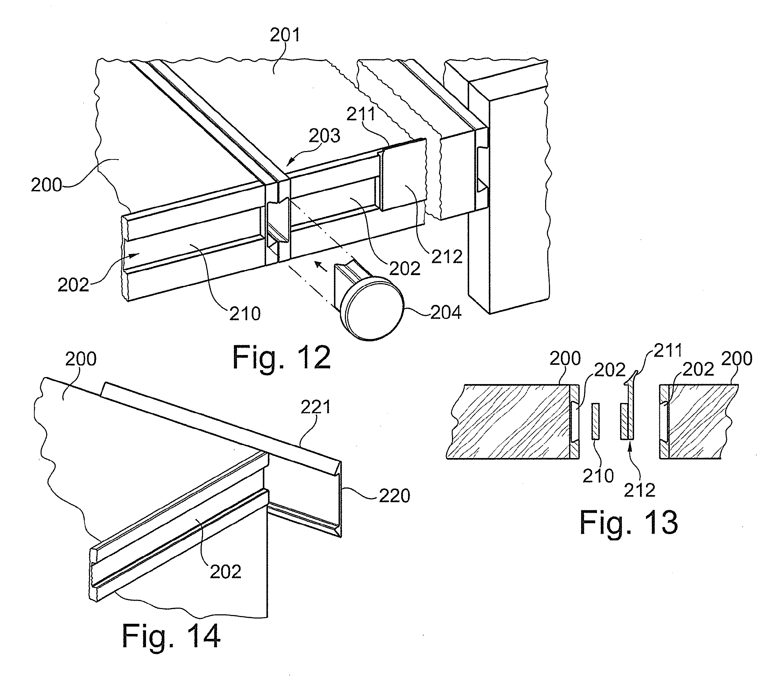

Fig. 12 zeigt eine Darstellung einer Querverbindung mit Steckelement und Wandabschluss. Zwei Plattenelemente 200 und 201 weisen vollständig oder zumindest teilweise umlaufende Nuten 202 auf. Die Nuten 202 weisen in einer bevorzugten Ausführungsform eine Schwalbenschwanzform auf. An der Stoßseite 203 ist ein Verbindungs-Steckelement 204 vorgesehen, welches formschlüssig in die Nuten 202 eingreift und die Plattenelemente 200 und 201 verbindet. Durch Ausführung mit entsprechender Vorspannung des Steckelements 204 kann ein fester Halt zwischen beiden Plattenelementen 200 und 201 erzielt werden.

Zu Dekorationszwecken kann in die Nut 202 eine Blende 210 eingeschoben werden. Diese Blende 210 kann in verschiedenen Farben oder Materialien ausgebildet sein.

Funktionell kann in die Nut 202 auch ein Wandabschluss 212 mit oben überragender Dichtlippe 211 eingeschoben werden, welche die Oberseite der Arbeitsplatte 201 gegenüber der Wand abdichtet. Eine Schnittdarstellung der Abschlussleisten ist in Figur 13 dargestellt. Eine schematische Darstellung der Montage einer Wandabschlussleiste 220 mit Dichtlippe 221 ist in Fig. 14 dargestellt wobei die Wandabschlussleiste 220 die Nut 202 überdeckt und über die komplette Stärke der Platte 200 aufgesteckt wird.

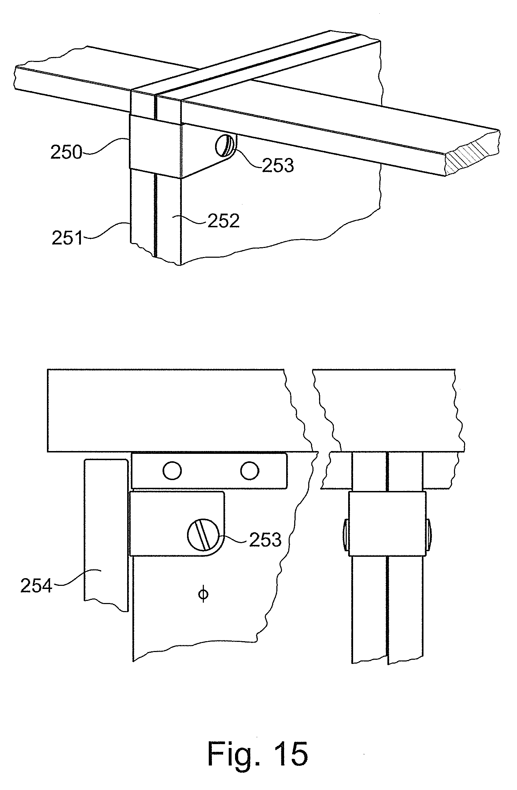

Fig. 15 zeigt einen Korpusverbinder 250 welcher zwei Seitenwangen 251 und 252 fasst und verbindet. Der Korpusverbinder 250 wird mittels Schrauben 253 als Bajonett oder Gewinde oder in oben bezeichneter Verbindungstechnik an den Seitenwangen 251 und 252 fixiert. Er kann als Anschlag für Türen 254 ausgeführt werden. Wird der Korpusverbinder 250 vorgespannt ausgeführt, drückt er die Korpusteile zusammen und stabilisiert das Möbelsystem.

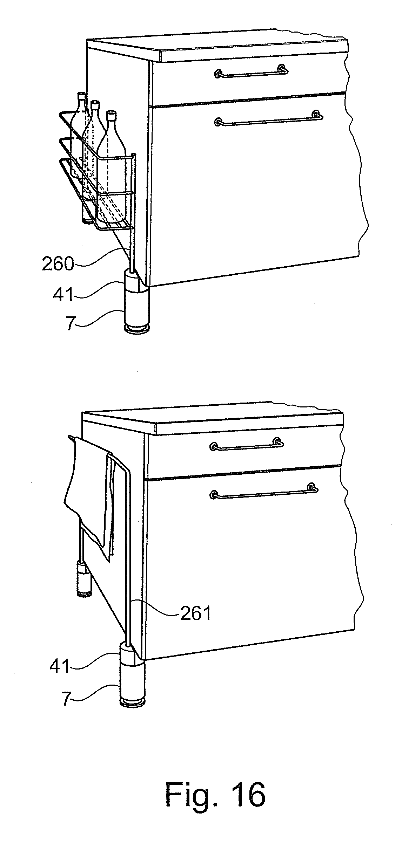

Fig. 16 zeigt Darstellungen von aufsteckbaren Zubehörhaltern 260, 261 im Bereich der Sockelfüße 7 bzw. der Blendkappen 41. In den Blendkappen 41 sind dazu entsprechende Bohrungen vorgesehen, welche beispielsweise einen Flaschenhalter 260 oder einen Handtuchhalter 261 aufnehmen.

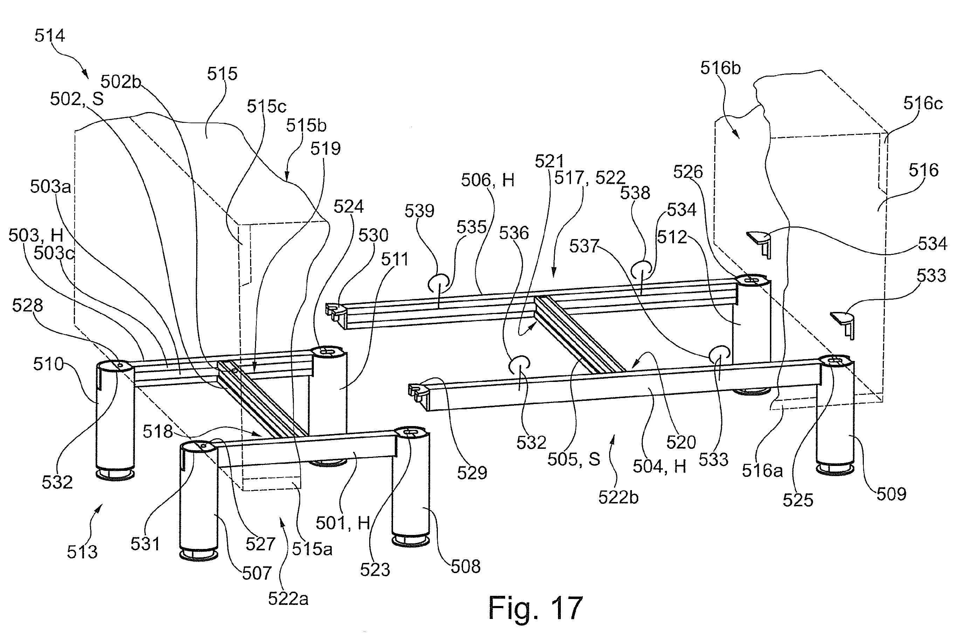

In der Figur 17 ist eine perspektivische Ansicht eines aus Profilschienen 501 - 506 bzw. Hohlprofilschienen und Sockelfüßen 507 bis 512 gebildeten Unterbaus 513 eines Möbelelements 514 darstellt. Das Möbelelement 514 umfasst weiterhin ein erstes Korpuselement 515 bzw. erstes Korpusteil und ein zweites Korpuselement 516 bzw. zweites Korpusteil, welche beide schematische angedeutet sind. Es wird auch auf die Figuren 1 bis 16 und die zugehörige Beschreibung Bezug genommen, sofern diese den grundsätzlichen Aufbau eines erfindungsgemäßen Möbelelements betreffen. In der Figur 17 ist der Unterbau 513 des Möbelelements 514 noch unvollständig zusammengebaut gezeigt. Durch diese Darstellung soll erläutert werden, wie sich ein Tragrahmen 517 zusammensetzt und wie der Tragrahmen 517 mit den Sockelfüßen 507 bis 512 verbunden ist.

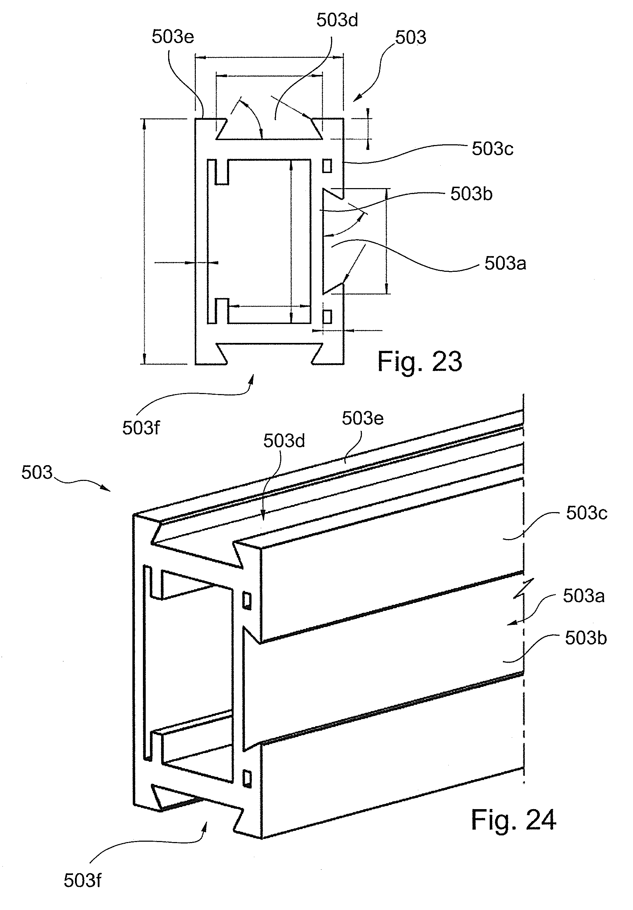

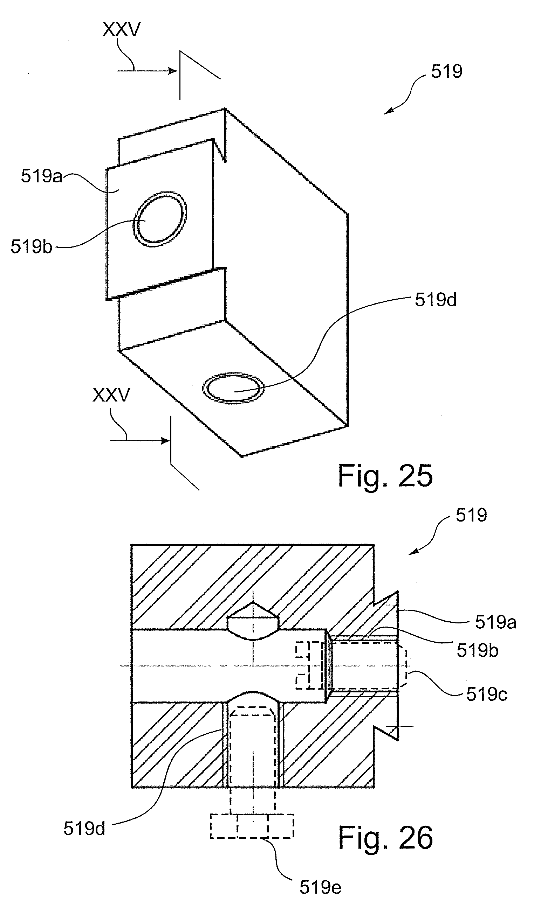

Der Tragrahmen 517 umfasst neben den sechs Profilschienen 501 bis 506 auch vier Verbindungsmittel 518, 519, 520 und 521, welche jeweils endseitig in den Profilschienen 502 und 505 aufgenommen sind. Der Tragrahmen 517 ist als Leiterrahmen 522 ausgeführt und diejenigen Profilschienen 502 und 505, welche die Verbindungsmittel 518 bis 521 aufnehmen bilden Sprossen S des Leiterrahmens 522. Die anderen Profilschienen 501, 503 und 504, 506 bilden Holme H des Leiterrahmens 522. In den Figuren 25 und 26 ist das Verbindungsmittel 519, welches in der Figur 17 nicht sichtbar in der Profilschiene 502 aufgenommen ist, exemplarisch in perspektivischer und in geschnittener Ansicht gezeigt. Das Verbindungsmittel 519 umfasst einen im Querschnitt schwalbenschwanzförmigen Steg 519a, mit welchem es in eine im Querschnitt schwalbenschwanzförmige Nut 503a der Profilschiene 503 eingeschoben ist. In den Figuren 23 und 24 ist die Profilschiene 503 im Schnitt und in einer perspektivischen Ansicht dargestellt. Das Verbindungsmittel 519 ist in der Nut 503a jedoch nicht nur geführt, sondern umfasst eine Gewindebohrung 519b und eine in der Figur 26 schematisch dargestellte Schraube 519c, welche zur Fixierung des Verbindungsmittels 519 gegen einen Nutgrund 503b der Profilschiene 503 geschraubt wird, wenn das Verbindungsmittel 519 in der gewünschten Position an der Profilschiene 503 steht. Die Schraube 519c ist als Madenschraube ausgeführt.

Nach dem Fixieren des Verbindungsmittels 519 kann dann die Profilschiene 502 auf das Verbindungsmittel 519 aufgesteckt werden. Hierbei wird die Profilschiene 502 vorzugsweise soweit aufgeschoben, dass diese an eine Seitenfläche 503c der Profilschiene 503 anliegt. Das Verbindungsmittel 519 umfasst eine weitere Gewindebohrung 519d und eine weitere, schematisch dargestellte Schraube 519e. Die Gewindebohrung 519d und eine in der Profilschiene 502 ausgeführte Bohrung 502b sind so aufeinander abgestimmt, dass die Schraube 519e bei korrekt auf das Verbindungsmittel 519 aufgeschobener Profilschiene 502 durch die Bohrung 502b hindurch in die Gewindebohrung 519d eingeschraubt werden kann, so dass die Profilschiene 502 an der Profilscheine 503 als Sprosse S befestigt ist. Die Verbindung der Profilschiene 502 zu der Profilschiene 501 und der Profilschiene 505 zu den Profilschienen 504 und 506 erfolgt in gleicher Weise, so dass zwei stabile H-förmige Leiterrahmenabschnitte 522a und 522b gebildet sind. Zum vollständigen Zusammenbau des Unterbaus 513 werden die Holme bildenden Profilschienen 501, 503, 504 und 506 endseitig jeweils mit ersten Eckelementen 523 bis 526 und zweiten Eckelementen 527 bis 530 bestückt, welche jeweils endseitig in die Profilschienen 501, 503, 504 und 506 eingesteckt werden.

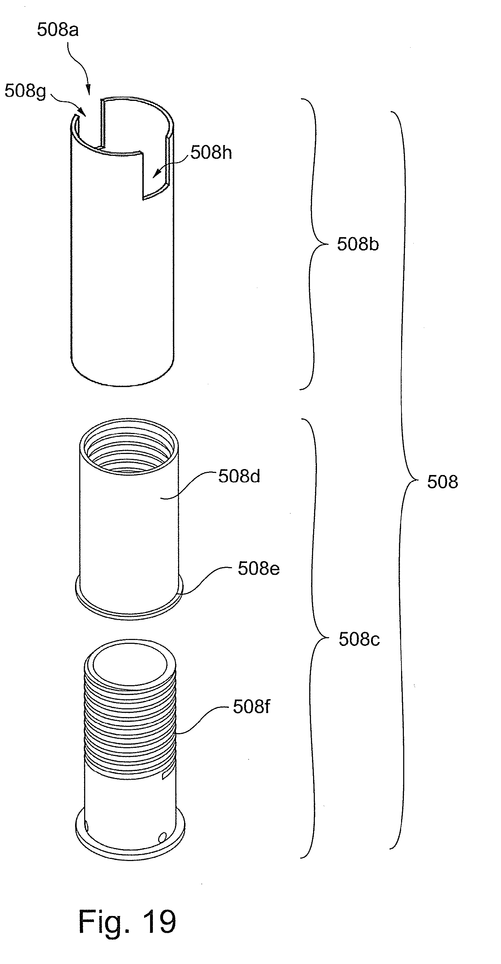

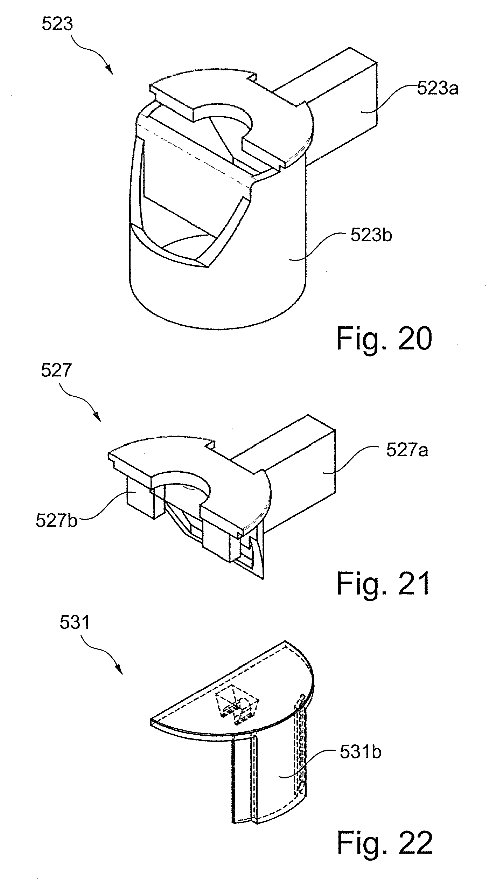

In der Figur 20 ist exemplarisch das erste Eckelement 523 gezeigt und in der Figur 21 ist exemplarisch das zweite Eckelement 524 gezeigt. Das erste Eckelement 523 und das zweite Eckelement 529 sind derart aufeinander abgestimmt, dass diese gemeinsam von einer oberen Öffnung 508a eines Tragrohrs 508b des Sockelfußes 508 aufgenommen werden. Hierzu wird auch auf die Explosionsdarstellung der Figur 19 verwiesen, welche das Tragrohr 508b und ein Justiermittel 508c des Sockelfußes 508 exemplarisch für alle Sockelfüße zeigt. Hierbei ist das Justiermittel 508c zweiteilig ausgeführt und umfasst eine

Gewindehülse 508d mit einem Kragen 508e, welche von unten in das Tragrohr 508b eingeschoben wird. Weiterhin umfasst das Justiermittel 508c einen Schaubfuß 508f, welcher in die Gewindehülse 508d derart tief eingeschraubt wird, dass der Sockelfuß 508 die gewünschte Höhe aufweist. Das erste Eckelement 524 und das zweite Eckeelement 529 sind so gestaltet, dass das erste Eckelement 524 vor dem zweiten Eckelement 529 in das Tragrohr 508b eingesteckt werden muss. Die Profilschienen 501 und 504 erhalten ihre Orientierung dadurch, dass das Tragrohr 508b gegenüberliegende Schlitze 508g und 508h aufweist, in welchen die Profilschienen 501 bzw. 504 geführt sind.

Grundsätzlich ist es so, dass ein erfindungsgemäßes Möbelelement auch aus dem ersten Leiterahmenabschnitt 522a und dem ersten Korpuselement 515 oder aus dem zweiten Leiterahmenabschnitt 522b und dem zweiten Korpuselement 516 gebildet werden kann, wobei der zweite Leiterrahmenabschnitt 522b hierzu noch um zwei Sockelfüße ergänzt werden müsste. Hierbei umfassen alle Varianten von erfindungsgemäßen Möbelelementen in essentieller Weise Verbindungselemente wie diese in den Figuren 4 bis 7 und 9, 10 gezeigt sind, wobei die Verbindungselemente in analoger Weise an dem in den Figuren 17 ff. gezeigten Möbelelement verbaut sind und gehandhabt werden und jeweils mit einer zweiten Nut 503d der Profileschiene 503 bzw. der anderen Profilschienen zusammenwirken. Entsprechend ist auch ein Korpusboden 515a des Korpuselements 515 und ein Korpusboden 516a des Korpuselements 516 analog zu dem in den Figuren 4, 5 und 6 bzw. 9, 10 gezeigten Korpusboden 30 so ausgeführt, dass diese die Verbindungselemente aufnehmen können und dass die Verbindungselemente von einem Innenraum 515b bzw. 516b der Korpuselemente 515 bzw. 516 aus betätigt werden können, um diese mit jeweils einer der Profilschienen 501 bis 506 zu verriegeln. Zur Erläuterung sind an dem zweiten Leiterrahmenabschnitt 522b durch senkrechte Linien schematisch vier Verbindungselemente 532, 533, 534 und 535 angedeutet, durch welche das zweite Korpuselement 516 mit dem zweiten Leiterrahmenabschnitt 522b verbunden ist. Durch Kreisbögen sind Aufnahmen 536, 537, 538 und 539 in dem Korpusboden 516a des zweiten Korpuselements 516 angedeutet, in welchen Kopfkörper der Verbindungselemente 532, 533, 534 und 535 aufgenommen sind. Fußkörper der Verbindungselemente 532, 533, 534 und 535 sind im fertig montierten Zustand des Möbelelements 514 mit den zweiten Nuten 503d (siehe Figur 23) der Profilschienen 501 bis 506 verbunden.

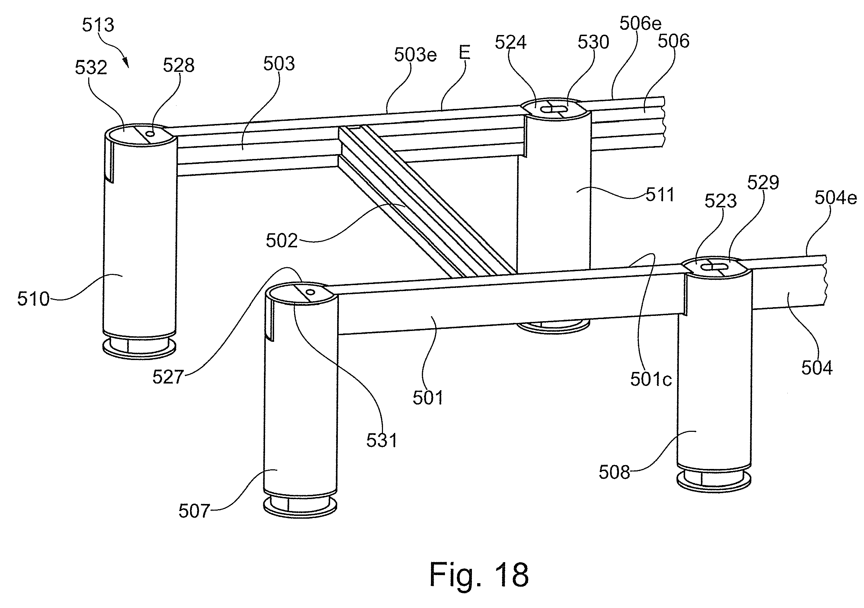

In der Figur 18 ist eine weitere perspektivische Darstellung des in der Figur 17 gezeigten Unterbaus 513 in vergrößerter und vollständig zusammengebauter Ansicht gezeigt. In dieser Darstellung ist erkennbar wie die zweiten Eckelemente 529, 530, welche mit den Profilschienen 504, 506 verbunden sind, nun zusammen mit den Eckelementen 523, 254, welche mit den Profilschienen 501, 503 verbunden sind, in den Sockelfüßen 508, 511 aufgenommen sind, so dass alle Eckeelemente 523, 529 und 524, 530 und Oberseiten 501e, 504e, 503e und 506e der Profilschienen 501, 504, 503 und 503 sowie 502 und 505 eine ebene Auflagefläche E bilden, auf welcher die in der Figur 17 gezeigten Korpuselemente 515, 516 mit ihren Korpusböden 515a und 516a aufliegen. Zusätzlich zu den ersten und zweiten Eckelementen umfassen die Sockelfüße auch Blendkappen 531, 532, 533 und 534 bzw. Abdeckkappen (siehe Figuren 17 und 18). Diese Abdeckkappen 531 bis 534 werden in die Sockelfüße 507, 510, 509 und 512 eingesetzt, welche mit nur einer Profilschiene 501, 503, 504 bzw. 506 verbunden sind, um die Sockelfüße 507, 510, 509 und 512 auch in einem Bereich abzudecken, in welchem diese seitlich über eine Seitenwange 515c bzw. 516b der Korpuselemente 515 bzw. 516 überstehen. Grundsätzlich ist der Unterbau 513 auch dadurch gekennzeichnet, dass diejenigen Sockelfüße, welche mit nur einer Profilschiene verbunden sind, seitlich über die Seitenwangen 515c, 516c des oder der Korpuselemente 515, 516 des Möbelelements 514 überstehen. Hierdurch ist in unkomplizierter Weise eine Erweiterung des Möbelelements 514 entweder durch Zubehörteile, wie diese in der Figur 16 gezeigt sind, oder durch eine Ergänzung des Unterbaus und wenigstens ein weiteres Korpuselement möglich.

Die Profilschiene 503 umfasst eine weitere Nut 503f, welche der Nut 503d gegenüber liegt. Gemäß einer nicht dargestellten Ausführungsvariante ist es vorgesehen, dass das Möbelelement auch wenigstens eine Sockelleiste umfasst, wobei die Sockelleiste in der Nut 503f fixiert ist, welche gegenüber der Nut 503d angeordnet ist, welche die Befestigungsmittel aufnimmt. Durch die Ausführung der dritten Nut 503f als hinterschnittene Nut insbesondere als im Querschnitt schwalbenschwanzförmige Nut ist es möglich, die Sockelleiste als Blende auszuführen, welche einen auf die Nut angepassten Kopf aufweist, mit welchem diese analog zur Darstellung der Figur 10 in die Nut 503f einrastbar ist. Somit ist eine schnelle und werkzeugfreie Montage möglich. Selbstverständlich ist auch die Anbringung andere Anbauteile in der Nut 503f vorgesehen. Insbesondere ist die dritte Nut bei wandseitig verlaufenden Profilschienen auch zur Aufnahme von Kabel- oder Schlauchschellen vorgesehen, so dass Zuleitungen zu Elektrogeräten definiert an dem Möbelelement geführt sind.

Wie in den Figuren 20 und 21 gezeigt weisen die exemplarisch für alle ersten und zweiten Eckelemente gezeigten Eckelemente 223 und 227 jeweils einen ersten, waagrecht ausgerichteten Hals 523a bzw. 527a und einen zweiten, nach unten ausgerichteten Hals 523b bzw. 527b auf. Hierbei ist der erste Hals 523a, 527a jeweils zum spielfreien und verliersicheren Einstecken in eine der Profilschienen ausgeführt. Hierbei ist der zweite Hals 523b, 527b jeweils zum spielfreien und verliersicheren Einstecken in einen der Möbelfüße ausgeführt. Die in der Figur 22 exemplarisch für alle in den Figuren 17 und 18 dargestellte Blendkappe 531 weist nur einen nach unten gerichteten Hals 531b auf, durch welchen diese spielfrei und verliersicher in einen der Sockelfüße einsteckbar ist, in welchem bereits ein erstes oder ein zweites Eckelement aufgenommen ist.

### Bezugszeichenliste:

- 1: Möbelelement
- 2: Hochschrank
- 3: Spülmaschine
- 4: 60er Unterschrank
- 5: 90er Unterschrank
- 6: Arbeitsplatte
- 7: Sockelfuß
- 10: Wange
- 11: Unterschrankwange
- 12: Trägerprofil / Profilschiene
- 15: Zapfen
- 16: Sockelfuß vom Trägerprofil angehoben
- 17: Justiermittel
- 20: Verbindungselement
- 21: Kopf von 20
- 21a: kugelähnliche Kopfform
- 21b: Ausnehmung für 35 in 21
- 22: Aufnahme von 20
- 23: Platte von 20
- 23a, 23b: Flügel
- 24: oberer Bereich von 12
- 25: vertikale Richtung
- 26: Drehrichtung
- 27: Nut
- 27a, 27b: Hinterschnitt von 27
- 28: länglicher Teil von 23
- 30: Korpusboden
- 31: Aufnahme in 30
- 31a: Bohrung
- 35: Dreh-Hilfsmittel
- 36: Drehrichtung
- 40: Seitenwange
- 41: Blendkappe
- 42: offener Bereich
- 45: Schmalseite von 23
- 46: erste Materialstärke von 23
- 47: zweite Materialstärke von 23
- 50: Seitenverbinder
- 51: Fräsung
- 52: Möbelplatte
- 53: Loch
- 54: Ausnehmung
- 60: Türbeschlag
- 61: Fachbodenauflage
- 62: Verschieben
- 63: Einklicken
- 64: Hilfsmittel
- 100: Verbindungselement
- 101: Konterplatte
- 102: Kopf 1
- 103: Platte
- 102a: Kugelkopf
- 110: Profil
- 110a, 110b: Seitenfläche von 110
- 111: Eckelement
- 113: Nut
- 113a, 113b: Hinterschnitt von 113
- 120: Korpusboden
- 121: Aufnahme
- 122: Pfeilrichtung
- 124: Längsrichtung
- 130: Einführungsöffnung
- 131: Zeichnungsbereich
- 140: Rastklinke
- 140a, 140b: Rastkörper

- 200, 201: Plattenelemente / Arbeitsplatte
- 202: umlaufende Nut
- 203: Stoßseite
- 204: Verbindungs-Steckelement
- 210: Blende
- 212: Wandabschluss
- 211: Dichtlippe
- 220: Wandabschlussleiste
- 221: Dichtlippe
- 250: Korpusverbinder
- 251, 252: Seitenwangen
- 253: Schraube
- 254: Tür
- 260: Flaschenhalter
- 261: Handtuchhalter

- dKK: Drehachse auf 30
- EE: Eckelement
- EE1, EE2: erster, zweiter Hals von EE
- FK: Fußkörper von 27 bzw. 100
- KK: Kopfkörper von 27 bzw. 100
- K1 - K3: Korpusteil
- TR: Tragrahmen

- 501 - 506: Profilschiene
- 502b: Bohrung
- 503a: schwalbenschwanzförmige Nut
- 503b: Nutgrund
- 503c: Seitenfläche
- 503d: zweite Nut
- 503e: Oberseite
- 503f: Nut
- 507 - 512: Sockelfuß
- 508a: obere Öffnung
- 508b: Tragrohr
- 508c: Justiermittel
- 508d: Gewindehülse
- 508e: Kragen
- 508f: Schaubfuß
- 508g, 508h: Schlitz
- 513: Unterbau
- 514: Möbelelement
- 515: erstes Korpuselement /Korpusteil
- 515a: Korpusboden
- 515b: Innenraum
- 515c: Seitenwange
- 516: zweites Korpuselement / Korpusteil
- 516a: Korpusboden
- 516b: Innenraum
- 516c: Seitenwange
- 517: Tragrahmen
- 518 - 521: Verbindungsmittel
- 519a: schwalbenschwanzförmiger Steg
- 519b: Gewindebohrung
- 519c: Schraube
- 519d: Gewindebohrung
- 519e: Schraube
- 522: Leiterrahmen
- 522a: H-förmiger, erster Leiterahmenabschnitt
- 522b: H-förmiger, zweiter Leiterahmenabschnitt
- 523 - 526: erstes Eckelement
- 523a: erster Hals
- 523b: zweiter Hals
- 527 - 530: zweiten Eckelement
- 527a: erster Hals
- 527b: zweiter Hals
- 531 - 534: Blendkappe bzw. Abdeckkappe
- 531b: Hals
- 532 - 535: Verbindungselemente
- 536 - 539: Aufnahme
- E: Auflagefläche
- H: Holm
- S: Sprosse

## Patentansprüche

1. Möbelelement (1; 514), insbesondere Küchenmöbelelement umfassend
- wenigstens ein Korpuselement (K1 - K3; 515, 516),
- wenigstens vier Sockelfüße (7; 507 - 512) und
- wenigstens drei Verbindungselemente (20; 100; 532 - 535), **dadurch gekennzeichnet,**
- **dass** das Möbelelement (1; 514) weiterhin wenigstens einen Tragrahmen (TR; 517) umfasst,
- **dass** der Tragrahmen (TR; 517) zwischen dem Korpuselement (K1 - K3; 515, 516) und den Sockelfüßen (7; 507 - 512) angeordnet ist und
- **dass** der Tragrahmen (TR; 517) wenigstens drei Profilschienen (12; 110; 501 - 506) umfasst,
- wobei die Profilschienen (12; 110; 501 - 506) derart miteinander verbunden sind, dass der Tragrahmen (TR; 517) als Leiterrahmen (522) ausgebildet bildet ist,
- wobei das Korpuselement (K1 - K3; 515, 516) einen Korpusboden (30; 515a, 516a) umfasst und
- wobei die Verbindungselemente (20; 100; 532 - 535) zur Verbindung des Korpuselements (K1 - K3; 515, 516) und des Tragrahmens (TR; 517) sowohl in dem Korpusboden (30; 515a, 516a) derart formschlüssig und/oder kraftschlüssig als auch in dem Tragrahmen (TR; 517) derart formschlüssig und/oder kraftschlüssig aufgenommen sind, dass seitlich auf das Korpuselement (K1 - K3; 515, 516) einwirkende Kräfte auf den Tragrahmen (TR; 517) übertragen werden.

2. Möbelelement nach Anspruch 1, **dadurch gekennzeichnet, dass** die Profilschiene (12; 110; 501 - 506) als Hohlprofilschiene (12; 110; 501 - 506) ausgebildet ist, wobei die Hohlprofilschiene (12; 110; 501 - 506) einen im wesentlichen rechteckigen Innenquerschnitt aufweist, wobei die Hohlprofilschiene (12; 110; 501 - 506) an wenigstens einer Seitenfläche (503c) und insbesondere an zwei oder drei benachbarten Seitenflächen (503c) eine hinterschnittene Nut (27; 503a, 503d) aufweist.

3. Möbelelement nach Anspruch 2, **dadurch gekennzeichnet, dass** die hinterschnittene Nut (27; 113; 503a; 503d) bzw. die hinterschnittenen Nuten (27; 503a, 503d) der Hohlprofilschiene (12; 110; 501 - 506) als im Querschnitt schwalbenschwanzförmige Nut bzw. Nuten ausgebildet ist bzw. sind.

4. Möbelelement nach wenigstens einem der vorhergehenden Ansprüche, **dadurch gekennzeichnet, dass** das Möbelelement (1; 514) wenigstens zwei Verbindungsmittel (518 - 521) umfasst, wobei jedes Verbindungsmittel (518 - 521) an wenigstens einer Seitenfläche einen auf den Querschnitt der Nut (27; 113; 503a; 503d) angepassten Steg (519a) aufweist, welcher derart ausgebildet ist, dass das Verbindungsmittel (518 - 521) mit dem Steg (519a) weitgehend spielfrei in die Nut (27; 113; 503a; 503d) einer der Hohlprofilschienen (12; 110; 501 - 506) einschiebbar ist.

5. Möbelelement nach Anspruch 4, **dadurch gekennzeichnet, dass** wenigstens ein Steg (519a) jedes Verbindungsmittel (518 - 521) eine diesen Steg (519a) durchlaufende Gewindebohrung (519b) und eine passende Schraube (519c) umfasst.

6. Möbelelement nach Anspruch 4 oder 5, **dadurch gekennzeichnet, dass** das Verbindungsmittel (518 - 521) derart auf einen Innenquerschnitt der Hohlprofilschiene (12; 110; 501 - 506) angepasst ist, dass das Verbindungsmittel (518 - 521) zur Verbindung zweier Hohlprofilschienen (12; 110; 501 - 506) weitgehend spielfrei in eine der Hohlprofilschienen (12; 110; 501 - 506) einsteckbar ist und dass die das Verbindungsmittel (518 - 521) aufnehmende Hohlprofilschiene (12; 110; 501 - 506) eine Bohrung (502b) aufweist, welche bei eingestecktem Verbindungsmittel (518 - 521) auf eine weitere in dem Verbindungsmittel (518 - 521) ausgeführte Gewindebohrung (519d) ausgerichtet ist, wenn das Verbindungsmittel (518 - 521) mit seinem Steg (519a) in der anderen Hohlprofilschiene (12; 110; 501 - 506) geführt ist und die beiden Hohlprofilschienen (12; 110; 501 - 506) auf Stoß aneinander anliegen.

7. Möbelelement nach wenigstens einem der vorhergehenden Ansprüche, **dadurch gekennzeichnet, dass** jeder Sockelfuß (7; 507 - 512) wenigstens ein Eckelement (EE; 523 - 523, 527 - 530), ein Tragrohr (508b) und ein Justiermittel (17; 508c) umfasst, wobei das Eckelement (EE; 523 - 523, 527 - 530) einen ersten Hals (523a, 527a) und einen rechtwinklig dazu angeordneten zweiten Hals (523b; 527b) umfasst, wobei das Eckelement (EE; 523 - 526, 527 - 530) mit seinem ersten, waagrecht im Raum ausgerichteten Hals (523a, 527a) auf einen Innenquerschnitt der Hohlprofilschiene (12; 110; 501 - 506) angepasst ist und wobei das Eckelement (EE; 523 - 526, 527 - 530) mit seinem im Raum senkrecht nach unten ausgerichteten Hals (523b; 527b) auf einen Innenquerschnitt des Tragrohrs (508b) angepasst ist, so dass das Eckelement (EE; 523 - 526, 527 - 530) klemmend in der Hohlprofilschiene (12; 110; 501 - 506) und in dem Tragrohr (508b) gehalten ist.

8. Möbelelement nach wenigstens einem der vorhergehenden Ansprüche, **dadurch gekennzeichnet, dass** der Korpusboden (30; 515a, 516a) des Korpuselements (K1 - K3; 515, 516) Aufnahmen (31; 121; 536 - 539) für die Verbindungselemente (20; 100; 532 - 535) umfasst, wobei das Verbindungselement (20; 100; 532 - 535) einen Kopfkörper (KK) und einen Fußkörper (FK) umfasst und wobei der Kopfkörper (KK) in der Aufnahme (31; 121; 536 - 539) des Korpusbodens (30; 515a, 516a) formschlüssig und insbesondere drehbar um eine senkrecht auf dem Korpusboden (30; 515a, 516a) stehende Drehachse (dKK) aufgenommen ist und wobei der Fußkörper (FK) entweder an einer Seitenfläche (110a, 110b) einer der Hohlprofilsschienen (12; 110; 501 - 506) des Tragrahmens (TR; 517) anliegt oder in einer der Nuten (27; 503a, 503d) einer der Hohlprofilschienen (12; 110; 501 - 506) des Tragrahmens (TR; 517) aufgenommen ist.

9. Möbelelement nach Anspruch 8, **dadurch gekennzeichnet, dass** der Fußkörper (FK) derart auf eine hinterschnittene Nut (27; 503a, 503d) der Hohlprofilschiene (12; 110; 501 - 506) des Tragrahmens (TR; 517) angepasst ist, dass dieser senkrecht von oben in die Nut (27; 113; 503a; 503d) einsteckbar ist und dass dieser beim Einstecken mit gegenüberliegenden Rastkörpern (140a, 140b) in die Nut (27; 503a, 503d) einrastet oder dass dieser mit gegenüber liegenden Flügeln (23a, 23b) nach dem Eintritt in die Nut (27; 113; 503a; 503d) und einer Verdrehung um eine senkrechte Drehachse (dKK) gegenüberliegende Hinterschnitte (27a, 27b; 113a, 113b) der Nut (27; 113; 503a; 503d) hintergreift.

10. Möbelelement nach Anspruch 8, **dadurch gekennzeichnet, dass** der Kopfkörper (KK) eine Anpassung auf ein Handwerkzeug (35) umfasst, wobei diese insbesondere durch eine in dem Korpusboden (30; 515a, 516a) des Korpuselements (K1 - K3; 515, 516) ausgeführte Bohrung zugänglich ist

11. Möbelelement nach Anspruch 8, **dadurch gekennzeichnet, dass** der Fußkörper (FK) derart eine als hinterschnittene Nut (27; 113; 503a; 503d) der Hohlprofilschiene (12; 110; 501 - 506) des Tragrahmens (TR; 517) angepasst ist, dass dieser zur Montage des Korpuselements (K1 - K3; 515, 516) seitliche in die Nut (27; 113; 503a; 503d) eingeschoben ist.

12. Möbelelement nach Anspruch 7, **dadurch gekennzeichnet, dass** das Tragrohr (508b) und das Eckelement (EE; 523 - 523, 527 - 530) derart dimensioniert sind, dass das Tragrohr (508b) zwei aufeinander ausgerichtete Eckelemente (EE; 523 - 523, 527 - 530) aufnimmt.

13. Möbelmontagesystem zur werkzeugfreien Montage von Möbelelementen (1; 514), insbesondere Küchenmöbelelementen, wobei das Möbelmontagesystem mindestens ein Verbindungselement (20; 100) und mindestens eine Aufnahme (31; 121) umfasst, **dadurch gekennzeichnet, dass** das Verbindungselement (20; 100; 532 - 535) formschlüssig in die Aufnahme (31; 121; 536 - 539) eingeklickt wird und über Mittel (23; 101; 140) zur Befestigung in einer Profilschiene verfügt.
